# FASCICULE DE BREVET EUROPEEN

(11) **EP 2 389 701 B1**
(45) Date de publication et mention de la délivrance du brevet: **07.08.2013**
(21) Numéro de dépôt: 10704387.9
(22) Date de dépôt: 19.01.2010
(51) Int. Cl.: H01M 6/04, A41D 1/00

(54) **PILE ELECTROCHIMIQUE INTEGREE DANS UN VETEMENT UTILISANT UN FLUIDE PHYSIOLOGIQUE COMME ELECTROLYTE**
IN EIN KLEIDUNGSSTÜCK INTEGRIERTE UND EINE PHYSIOLOGISCHE FLÜSSIGKEIT ALS ELEKTROLYT VERWENDENDE ELEKTROCHEMISCHE BATTERIE
ELECTROCHEMICAL BATTERY INTEGRATED IN A PIECE OF CLOTHING AND USING A PHYSIOLOGICAL FLUID AS AN ELECTROLYTE

(30) Priorité: 20.01.2009 FR 0900244
(43) Date de publication de la demande: 30.11.2011
(73) Titulaire: Commissariat à l'Énergie Atomique et aux Énergies Alternatives, 75015 Paris (FR)
(72) Inventeur: REVOL CAVALIER, Frédéric, F-38180 Seyssins (FR)
(74) Mandataire: Bernstein, Claire Jacqueline
(86) Numéro de dépôt international: PCT/FR2010/000046
(87) Numéro de publication internationale: WO 2010/084265

(56) Documents cités:
- WO-A1-2006/028347
- WO-A2-2008/098882
- JP-A- 5 021 086
- JP-A- 2002 161 410
- US-A- 5 242 768
- US-A1- 2003 068 559
- PUSHPARAJ V L; SHAIJUMON M M; KUMAR A; MURUGESAN S; LIJIE CI; VAJTAI R; LINHARDT R J; NALAMASU O; AJAYAN P M: "Flexible energy storage devices based on nanocomposite paper" PROCEEDINGS OF THE NATIONAL ACADEMY OF SCIENCES OF USA, NATIONAL ACADEMY OF SCIENCE, WASHINGTON, DC, US, vol. 104, no. 34, 21 août 2007 (2007-08-21), pages 13574-13577, XP008110890 ISSN: 0027-8424 cité dans la demande
- NATARAJAN KARTHIKEYAN; DHAWAN ANUJ; SEYAM ABDELFATTAH M; GHOSH TUSHAR K; MUTH JOHN F: "Electrotextiles - Present and future" STRUCTURE AND MECHANICAL BEHAVIOR OF BIOLOGICAL MATERIALS. SYMPOSIUM - 29-31 MARCH 2005 - SAN FRANCISCO, CA, USA (IN: MATERIALS RESEARCH SOCIETY SYMPOSIUM PROCEEDINGS),, vol. 736, 1 janvier 2002 (2002-01-01), pages 85-90, XP009094127 ISBN: 978-1-55899-828-5

## Description

La présente invention concerne la mise au point de micro-sources d'énergie pour alimenter des dispositifs électriques ou électroniques.

La miniaturisation des composants électroniques permet le développement de nombreux appareils électriques ou électroniques de petite taille, parfois qualifiés de nomades car on peut les porter sur soi en toute circonstance. Il s'agit par exemple de lampes, de radios, de lecteurs de musique, d'appareils de géopositionnement par satellite (GPS pour Global Positioning System), de systèmes de monitoring du rythme cardiaque ou encore de téléphones ou d'appareils photographiques.

On peut également citer des équipements de sécurités et/ou militaires équipés de capteurs mesurant des données relatives à l'environnement (pollution, radioactivité...) ou encore des données physiologiques de la personne portant l'équipement (rythme cardiaque, température, tension...).

Un domaine particulier vise le développement de vêtements équipés de tels équipements électriques.

Il va sans dire que tous ces appareils ont besoin d'être alimentés par une énergie électrique dont la source doit être compatible avec l'usage des appareils nomades, c'est-à-dire, légère, peu encombrante et assurant une alimentation électrique de longue durée.

Si disposer de source d'énergie apporte un confort certain à l'utilisateur lorsqu'il s'agit d'équipements destinés aux loisirs, c'est un besoin essentiel pour des équipements militaires.

De plus, l'autonomie du militaire est souvent liée à l'énergie qu'il lui est possible d'embarquer. L'énergie étant consommable, il faut pouvoir en embarquer suffisamment pour être certain de ne pas tomber en panne. Or, les sources d'énergie sont lourdes à transporter et le poids est un élément critique pour les équipements de protection ou militaires.

Pour répondre à ce besoin, depuis plusieurs années, on cherche à miniaturiser les piles ou les batteries existantes et également à mettre au point de nouvelles générations de batteries au lithium ou lithium-ion plus puissantes et plus rapidement rechargeables que les batteries Nickel-Cadmium. Les batteries lithium-ion fonctionnent sur l'échange réversible de l'ion lithium entre une électrode positive, le plus souvent un oxyde de métal de transition lithié (dioxyde de cobalt ou manganèse) et une électrode négative en graphite ; elle nécessite l'emploi d'un électrolyte aprotique (tel qu'un sel LiPF6 dissous dans un mélange de carbonate) pour éviter de dégrader les électrodes très réactives.

Les piles à combustibles, au sein desquelles la fabrication de l'électricité se fait grâce à l'oxydation sur une électrode d'un combustible réducteur (par exemple l'hydrogène) couplée à la réduction sur l'autre électrode d'un oxydant, tel que l'oxygène de l'air, ont été développées pour les voitures électriques et sont également miniaturisées pour pouvoir équiper des individus et fournir l'énergie nécessaire au fonctionnement d'un équipement électronique embarqué.

Les systèmes existants permettant de fournir suffisamment d'énergie pour assurer le fonctionnement d'objets nomades comme des téléphones portables ou des caméras ne sont pas pour l'instant intégrables directement sur un vêtement. En effet, l'énergie nécessaire (de l'ordre du Watt) ne peut être à ce jour fournie que par des batteries au lithium ou aux Nickel-cadmium ou par des piles à combustibles miniaturisées embarquées dans une poche du vêtement. Ces technologies demandent en outre une fabrication complexe avec des matériaux rares et des électrolytes liquides.

D'autres sources d'énergie peuvent fournir une puissance de quelques mW par l'intermédiaire de cellules thermo-conductrices mais elles nécessitent l'utilisation de jonctions métalliques complexes (bismuth, telium, germanium) ou encore de semiconducteurs qui sont une source de pollution ; ces sources d'énergie sont de toute façon difficilement intégrables à un vêtement et chères à fabriquer.

Une solution alternative de sources d'énergie transportables vise la fabrication d'énergie directement par l'individu. C'est une voie intéressante car elle permet, premièrement, de récupérer de l'énergie électrique à partir de l'énergie dépensée par un individu et, deuxièmement, de limiter l'apport extérieur d'énergie à transporter.

Des systèmes de récupération d'énergie électrique générée par un individu ont déjà été décrits ; il s'agit par exemple d'une chaussure comprenant un dispositif piézoélectrique dans la semelle et qui génère de l'électricité par la déformation dudit dispositif lors de la marche (WO2006/014622). Cependant, les membranes piézo-électriques doivent être sollicitées en torsion pour fournir de l'énergie, il est donc difficile de trouver, sur un vêtement, un emplacement où de telles contraintes s'appliquent (les plus adaptées étant les semelles de chaussure) et la fourniture de l'énergie ne survient que lorsque la membrane est soumise à une activité physique.

D'autres techniques permettent de transformer l'énergie mécanique en énergie électrique, les plus connues étant la dynamo et la montre à balancier qui se remonte en utilisant le mouvement de la main. Une autre variante consiste à secouer un aimant à travers une bobine et à stocker l'électricité fournie dans un condensateur (lampe Nighstar flashlight de la société Applied Innovative Technology).

Sont également étudiés des dispositifs générant de l'électricité en utilisant la différence de température entre le corps humain et l'extérieur. Ces dispositifs reposent sur l'effet thermoélectrique qui est un phénomène physique présent dans certains matériaux : il y lie le flux de chaleur qui les traverse au courant électrique qui les parcourt. Cet effet est à la base d'applications de génération d'électricité : un matériau thermoélectrique va permettre de transformer directement de la chaleur en électricité (effet Seebeck ou effet Peltier).

Cependant, aucune de ces sources d'énergie ne peut être facilement incorporée à un vêtement, à faible coût et sans que le confort de l'utilisateur n'en soit affecté.

Des piles préparées avec des matériaux souples disposés en feuillet ont également été décrites ; bien qu'elles semblent plus adaptées à l'incorporation dans un vêtement, leur utilisation présente toutefois des inconvénients.

Pushparaj *et al.* ont développé des piles en déposant des couches de matériaux sur des supports souples ; ils ont plus particulièrement décrits une pile plane et souple à base de cellulose permettant de stocker et générer de l'énergie. Cette pile est composée de nanotubes de carbone qui servent de collecteur de courant et d'une anode en lithium. L'électrolyte est un liquide ionique tel qu'une solution d'hydroxyde de potassium, mais la pile fonctionne également avec un électrolyte physiologique tel que du sang ou de l'urine (Flexible energy storage devices based on nanocomposite paper, PNAS (2007) vol. 104 no. 34 13574-13577).

K. B. Lee de l'Institut de bioingénérie et de nanotechnologie de Singapour décrit une pile souple constituée d'un papier, préalablement chargé de particules de chlorure de cuivre, pris en sandwich entre deux électrodes métalliques déposées sur un support plastique souple. Les particules de chlorure de cuivre participent à la réaction électrochimique permettant la production d'énergie électrique dès lors que le papier est humidifié par de l'urine ou du sang (Urine-activated paper batteries for biosystems, J. Micromech. Microeng.12 (2005) S210-S214).

K. B. Lee divulgue également dans le document WO 2006/028347 une pile comprenant une anode et un matériau poreux dans lequel est intégrée une cathode en chlorure de cuivre ou en chlorure d'argent. Cette pile présente une structure sous forme de sandwich comprenant une couche en cuivre pour collecter les électrons, une feuille de matériau poreux dans lequel est intégrée la cathode en chlorure de cuivre et une couche de magnésium en tant qu'anode, ces couches étant disposées entre deux films en plastique transparent. Cette structure nécessite la présence des trous pour introduire l'eau et les fluides biologiques pouvant servir comme des substances conductrices d'électricité.

Cependant, la fabrication de ces piles fournissant de l'énergie à partir de liquides physiologiques nécessite la mise en oeuvre de matériaux chers et de procédés de fabrication complexes. En outre, ces piles sont des dispositifs en feuillet avec une épaisseur et une rigidité qui peuvent être gênantes lorsque ces piles sont incorporées un vêtement (risques d'inconfort).

Un autre inconvénient est que, pour fonctionner, ces piles nécessitent un système fluidique destiné à amener le liquide physiologique sur le capteur à un endroit précis de la pile.

Enfin, ces piles sont réalisées dans des matériaux qui peuvent être toxiques pour l'homme (nanotube de carbone, lithium) et polluants pour l'environnement.

Il s'avère donc nécessaire de mettre au point de nouvelles sources d'énergie pour le fonctionnement d'appareils électriques ou électroniques nomades et généralement peu consommateurs d'énergie, qui n'apportent pas de contraintes en termes d'encombrement pour l'utilisateur.

C'est ce à quoi est parvenue la Demanderesse en mettant au point une pile électrochimique directement intégrée par tissage ou couture dans un vêtement, cette pile comportant au moins deux électrodes, chacune constituée d'un matériau conducteur différent et utilisant comme électrolyte un fluide physiologique. En effet, la sueur, l'urine, les larmes peuvent être utilisées comme liquide conducteur ionique pour faire fonctionner la pile.

Plusieurs avantages découlent de l'utilisation de cette pile :
- la pile se réduit aux électrodes ; elle ne nécessite donc pas de stockage de l'électrolyte et son poids en est réduit ;
- aucun électrolyte nocif n'est utilisé ;
- l'électrolyte de cette pile est renouvelable à volonté ;
- la pile est fabriquée en même temps que le vêtement, sa fabrication ne demande donc pas d'étape supplémentaire pour l'intégrer au vêtement ;
- il est également possible de réaliser la connectique des différentes batteries présentes sur le vêtement pendant la fabrication du vêtement ; par exemple, il est possible de relier plusieurs piles entre elles puisqu'il suffit de coudre ou de tisser des fils métalliques entre ces piles pour les connecter en série ou en parallèle selon le besoin ;
- il n'est pas nécessaire de réaliser un système fluidique pour amener le liquide physiologique sur la pile car il suffit que l'électrolyte physiologique imbibe le tissu du vêtement pour être en relation directe avec les électrodes métalliques tissées ou cousues dans le vêtement. A ce titre, l'utilisation avantageuse d'un textile moulant directement le corps permet de maintenir un contact permanent entre les électrodes et le fluide corporel produit par le corps ;
- enfin, le vêtement reste confortable ; en effet seuls quelques fils métalliques sont ajoutés à la trame du tissu. Il n'y a pas de zones rapportées, rigides ou souples, contenant les piles, qui pourraient gêner le porteur du vêtement ;
- en outre, en étant intégrées à un vêtement, les électrodes constituant la pile peuvent recouvrir une surface importante, sans qu'il soit nécessaire de rapporter une pluralité de piles selon l'art antérieur.

Selon un premier de ses objets, la présente invention se rapporte à une pile électrochimique comportant au moins deux électrodes, chacune constituée d'un matériau conducteur différent, caractérisée en ce que lesdites électrodes sont tissées ou cousues dans le tissu d'un vêtement, ledit tissu comprenant entre 60 et 90% d'une fibre en matière naturelle animale ou végétale et entre 10 et 40% d'une fibre textile en matière chimique élastique, et que ladite pile utilise comme électrolyte un fluide physiologique.

De façon classique, une pile électrochimique est un dispositif qui transforme l'énergie d'une réaction chimique en énergie électrique. La pile abrite en effet une réaction chimique d'oxydo-réduction entre deux substances dont l'une peut céder facilement des électrons (matériau réducteur) et l'autre les absorbe (matériau oxydant). Chacun de ces matériaux est utilisé pour fabriquer une électrode ; les deux électrodes, l'anode ou borne (-) réalisée avec le matériau réducteur et la cathode ou borne (+) réalisée avec le matériau oxydant, baignent dans une solution ionique dite électrolyte. Le potentiel électrochimique des deux métaux constituant les électrodes détermine la tension de la pile. Une pile peut contenir plusieurs couples d'électrodes montées en série.

Par fluide ou électrolyte physiologique ou corporel, on entend tout liquide contenant des ions en solution et provenant d'un organisme animal, notamment humain. Par la suite, on désignera par individu le porteur de la pile selon l'invention, qu'il s'agisse d'un animal ou d'un homme.

Le fluide physiologique est plus spécifiquement constitué de sueur, d'urine, de sang, de larmes, de salive, de lymphe ou d'exsudat, qui désigne un liquide de nature séreuse dû à une modification de la perméabilité de la membrane des capillaires lymphatiques consécutive à une inflammation. Selon l'invention, le fluide physiologique est préférentiellement de la sueur ou de l'urine. La sueur est particulièrement préférée car elle peut être utilisée lorsque le porteur de vêtement se trouve dans une situation entraînant une sudation naturelle, par exemple au cours d'un effort physique.

La pile est telle que ses électrodes sont intégrées dans un vêtement ou accessoire destiné à être en contact avec un individu. Il est notamment envisageable de positionner les électrodes au sein d'un textile tissé ou non ou tricoté, utilisé pour réaliser un vêtement, ou encore, dans tout accessoire pouvant entrer en contact avec un électrolyte physiologique.

Dans le cadre de la présente invention, le terme vêtement désigne aussi bien des vêtements destinés à l'habillage que des accessoires textiles portés par un individu.

A titre d'exemple et sans aucun caractère limitatif, le terme vêtement peut désigner : pull, T-shirt, chemise, pantalon, jupe, robe, sous-vêtements, vestes, anorak, manteau, gants, bonnet, écharpe, foulard, bandeau, pansement...

De préférence, le vêtement est tel que toute ou partie de sa surface est en contact avec la peau de l'individu qui le porte, ce résultat est par exemple atteint en ajustant la coupe du vêtement à la taille dudit individu et/ou en choisissant un tissu élastique qui maintient le vêtement en contact avec la peau ; par tissu élastique, on entend un tissu qui s'allonge sous une force de traction et reprend rapidement sa forme initiale lorsque la traction cesse d'être appliquée.

Dans ce contexte, l'utilisation d'un tissu comprenant entre 60 et 90% d'une fibre en matière naturelle animale ou végétale et entre 10 et 40% d'une fibre textile en matière chimique élastique permet avantageusement la réalisation d'un tissu élastique et donc d'un vêtement qui assurera un bon contact entre le corps de l'individu porteur dudit vêtement et les électrodes, notamment lorsque le fluide corporel est de la sueur. L'utilisation d'un tissu élastique est donc particulièrement utile lorsque le vêtement est porté par un individu pratiquant une activité physique, l'élasticité du tissu assure un maintien permanent entre les électrodes et la sueur dudit individu.

Le vêtement peut être composé d'un ou plusieurs tissus. De façon générale, les tissus sont fabriqués avec des fibres textiles composées soit de matières naturelles : d'origine animale (laine de mouton, cachemire et mohair de chèvre, alpaga de lama, angora de lapin et de chèvre, soie de cocon de vers à soie), d'origine végétale (coton, lin, sisal, caoutchouc..) ou d'origine minérale (verre, carbone, métal...) ; soit de matières chimiques artificielles qui sont dérivées de la cellulose (viscose, modal, acétate... ) ou synthétiques qui sont dérivées des produits pétroliers (polyamide, polyester, acrylique, élasthanne...) ; parmi les fibres de matières chimiques, certaines sont élastiques, c'est-à-dire qu'elles s'allongent sous une force de traction et reprennent leur forme initiale lorsque la traction cesse d'être appliquée, on peut en particulier citer l'élasthanne. Un même tissu peut également être constitué de plusieurs types de fibres textiles.

Ainsi, en plus du tissu comprenant entre 60 et 90% d'une fibre en matière naturelle animale ou végétale et entre 10 et 40% d'une fibre textile en matière chimique élastique, le vêtement dans lequel est intégrée la pile selon l'invention peut également comporter un ou plusieurs autres tissus ; ce ou ces plusieurs autres tissus ne représenteront toutefois pas plus de 50%, de préférence 30%, et encore préférentiellement 15% de la surface totale dudit vêtement.

L'homme du métier choisira la composition du tissu ou du mélange de tissus en fonction de leur comportement en présence d'eau. C'est pourquoi sont préférentiellement utilisés les tissus composés majoritairement de fibres en matières naturelles animales ou végétales et leur mélange qui sont capables d'absorber de l'eau ou des solutions aqueuses telles que les électrolytes physiologiques.

A titre d'exemple, dans une variante particulière, le tissu comprenant entre 60 et 90% d'une fibre en matière naturelle animale ou végétale et entre 10 et 40% d'une fibre textile en matière chimique élastique est tel que ladite fibre en matière naturelle animale ou végétale est le coton et/ou ladite fibre textile en matière chimique élastique est l'élasthanne.

Le matériau conducteur utilisable pour la fabrication des électrodes est du métal, il s'agit notamment d'aluminium, d'argent, de cuivre, d'or... par exemple, ceux vendus par la société Goodfellow. Il est aussi envisageable de préparer une électrode par métallisation d'un fil textile par différentes techniques comme l'évaporation métallique, la pulvérisation cathodique ou la métallisation chimique.

Les électrodes métalliques sont constituées d'un ou plusieurs fils du même métal. Si plusieurs fils sont utilisés, chaque fil métallique doit être en contact avec au moins un autre fil métallique du même métal pour assurer la continuité électrique de l'électrode.

Les fils métalliques peuvent être cousus ou tissés avec des fils servant à la fabrication du vêtement de façon que la surface de l'électrode soit composée à la fois de fils métalliques et de fil textile identique au reste du vêtement.

Pour la mise en oeuvre de la pile, on associera de préférence des matériaux conducteurs présentant une différence de potentiel électrochimique théorique d'au moins 200 mV.

On utilise préférentiellement les couples d'électrodes comprenant une électrode en or et une électrode en aluminium ou une électrode en cuivre et une électrode en aluminium.

Selon un mode de réalisation avantageux de l'invention, les électrodes se présentent sous la forme de fils pouvant être tissés ou cousus dans ou sur un tissu. La forme, la longueur et la surface des électrodes peuvent être très diverses, il peut notamment s'agir de fil ou encore de carré, d'étoile, de rond... de surface comprise entre quelques millimètres carrés et plusieurs dizaines de centimètres carrés.

La pile selon l'invention est préparée en tissant ou cousant les électrodes dans un tissu sans qu'elles soient en contact l'une de l'autre afin d'éviter les courts-circuits ; elles peuvent par exemple être positionnées parallèlement ; un tel montage présente l'avantage de pouvoir associer un grand nombre de couples d'électrodes.

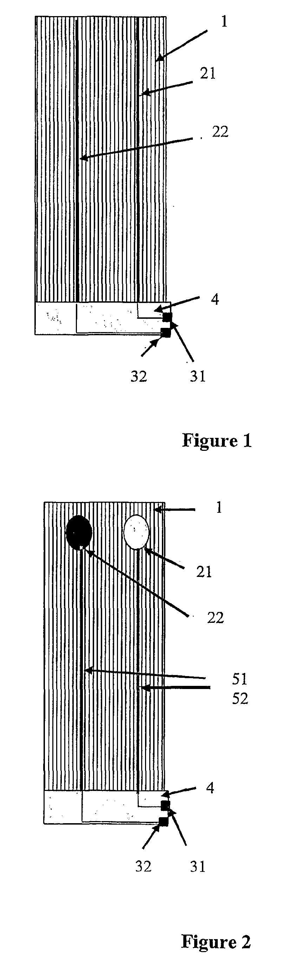

Selon un mode de réalisation préféré, les électrodes, désignées Electrode métallique Métal 1 (21) et Electrode métallique Métal 2 (22), sont des fils tissés dans le tissu constitué de fil de tissage (1) terminées par des plots de connexion de l'électronique (31) et (32) situés dans un ourlet ou une zone hydrophobe de connexion électrique (4) (voir la **Figure 1**) ; les fils peuvent avoir un diamètre compris entre 20 et 500 µm. Cependant, ces valeurs sont données à titre tout à fait indicatif puisque la forme et la dimension des électrodes seront ajustées par l'homme du métier en fonction de leur destination; en particulier, leur longueur est ajustée aux besoins du tissage. Un avantage de ce mode de réalisation est qu'ainsi tissée dans le tissu, l'électrode développe une grande longueur de fil, optimisant ainsi les surfaces d'échange pour la réaction d'électrolyse.

Un autre mode de réalisation est schématisé à la **Figure 2** où des électrodes (21) et (22) de forme ovale sont cousues sur le tissu; leur connexion à d'autres couples d'électrodes ou à l'appareil à alimenter électriquement est réalisée par des fils de connexion en métal isolé (51) et (52).

Dans le cadre de la mise en oeuvre de la pile selon l'invention, il est possible de mettre plusieurs piles en série ou en parallèle selon la quantité de courant ou la tension voulue. Concrètement ces montages peuvent être réalisés dans la doublure ou l'ourlet d'un vêtement. Ainsi, afin d'avoir plus de courant ou plus de tension que celles délivrées par une seule pile, il est possible de relier des couples d'électrodes entres elles afin d'obtenir suffisamment d'énergie pour l'alimentation du ou des appareils à alimenter électriquement.

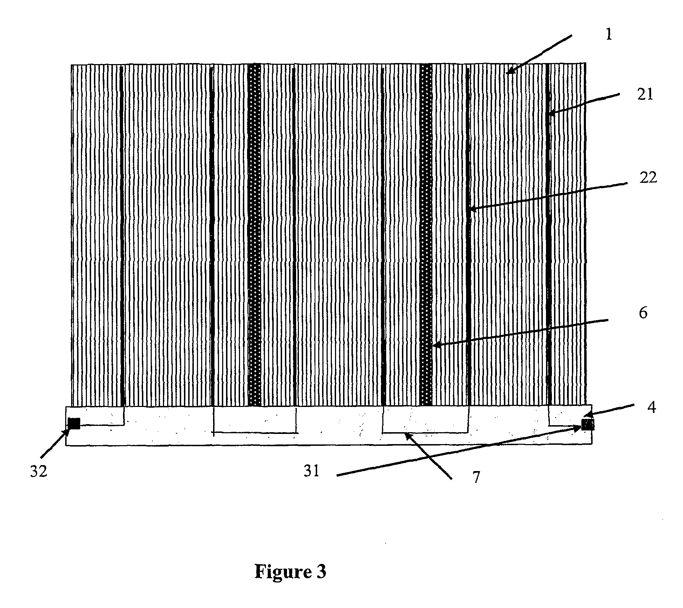

Un exemple de montage de plusieurs électrodes en série est représenté sur la Figure 3 où chaque couple d'électrodes est séparé par un matériau isolant (6) disposé dans le tissu parallèlement aux électrodes et où l'anode d'un couple d'électrodes est reliée par un fil conducteur (7) (fil métallique réalisé avec un métal tel que du cuivre, de l'aluminium, de l'or ou un alliage métallique) à la cathode du couple d'électrode voisin ; le fil conducteur est positionné dans une zone de connexion électrique isolée de l'électrolyte, par exemple une zone hydrophobe ou à l'intérieur d'une gaine isolante.

La zone hydrophobe permet de s'assurer que l'électrolyte ne passera pas dans le tissu sur une certaine surface du vêtement, elle permet ainsi d'isoler électriquement des parties de pile et d'empêcher l'électrolyte de court-circuiter des contacts électriques tels que des zones de connections électriques entre la pile et l'appareil à alimenter électriquement ou entre les électrodes et les fils de montage, de tels courts-circuits auraient pour conséquence de limiter les performances de la pile.

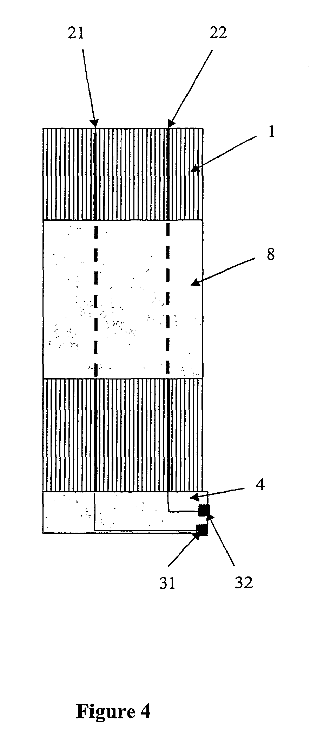

Il peut également être nécessaire de positionner une zone hydrophobe transversalement (8) par rapport aux électrodes (voir la **Figure 4**) ; un tel montage peut être utile pour délimiter des zones utiles à la production d'électricité et des zones sans application ou bien dédiées à d'autres applications, telles que la mesure de paramètres physiologiques, par exemple la mesure de paramètres physiologiques relatifs à un fluide corporel, notamment le fluide utilisé pour l'électrolyte. De tels paramètres peuvent être des mesures de concentration d'ions ou d'autres espèces chimiques.

Cette zone hydrophobe peut être obtenue par une sérigraphie d'un matériau hydrophobe dans les fibres du tissu, le matériau hydrophobe peut être une matière plastique telle que le polychlorure de vinyle (PVC) ou un film de polyester, par exemple le polyéthylène téréphtalate (PET) ; une résine hydrophobe telle qu'une résine époxy comme une résine Epotek (vendue par Epotecny sous la référence 06-142) ou une résine Vitralit (en particulier celle vendue sous la référence 1602), une résine polymérisable aux UV tel que la résine AZ4562 de Clariant, la résine NFR015 de Shipley ou encore la colle Epotek UV 06-12 ; ou un verni hydrophobe protecteur tel que le produit à base de silicone Electrofuge 200 commercialisé par KF.

La zone hydrophobe peut également être obtenue par tissage de fibres textiles hydrophobes telles que le nylon et le polypropylène sur une zone choisie du vêtement.

Enfin, la zone hydrophobe peut être obtenue par la couture ou le collage de matériaux hydrophobes comme par exemple des plastiques.

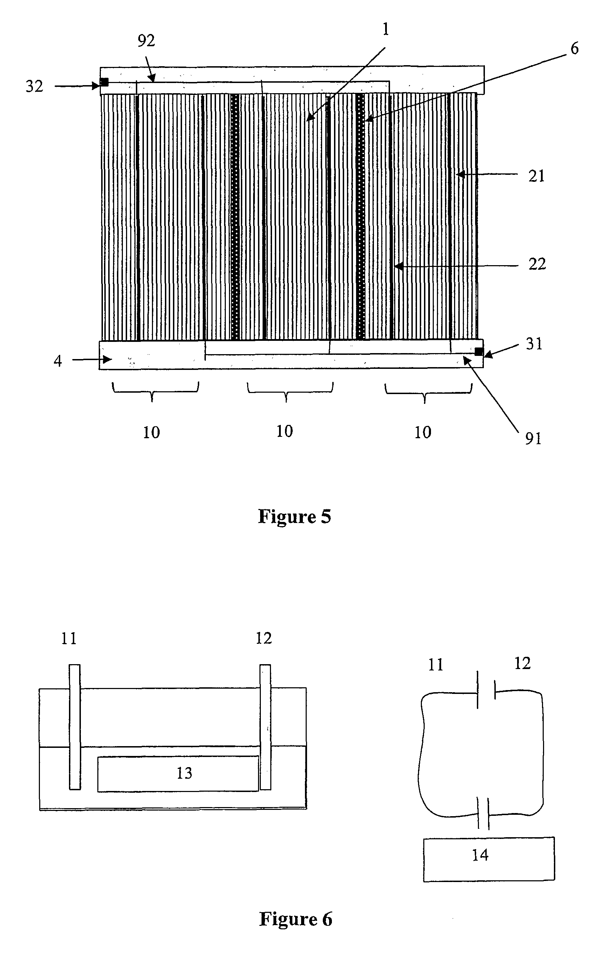

Un exemple de montage de plusieurs couples d'électrodes en parallèle est représenté à la **Figure 5** ; les cathodes (21) et les anodes (22) sont reliées entre elles par des fils de connexion : un fil (91) de connexion des cathodes et un fil (92) de connexion des anodes ; cette figure représente trois batteries (10) montées en parallèle.

Le fluide physiologique nécessaire au fonctionnement de la pile peut être apporté par l'individu lorsqu'il est en contact avec ledit vêtement.

Selon un mode de réalisation particulier de l'invention, les électrodes de la pile et l'appareil à alimenter électriquement peuvent être reliés par un fil de connexion en métal isolé. Les fils de connexion en métal, tel que le cuivre, l'or, l'aluminium ou un alliage métallique, isolé sont disponibles dans le commerce, à titre d'exemple, il peut s'agir de fils de métal isolés par une gaine de matériau isolant tel que du plastique, du PVC ou un verni hydrophobe.

Selon une variante, la pile est reliée à un appareil électrique ou électronique de façon à assurer leur fonctionnement grâce à l'alimentation électrique qu'elle génère.

Selon cette variante de l'invention, la pile alimente en électricité un dispositif électronique ou électrique.

Par appareil électrique, on entend par exemple et sans caractère limitatif, une lampe, une résistance chauffante (pour chauffer un vêtement afin de réchauffer le porteur, éventuellement pour accélérer son séchage)...

Par appareil électronique, on entend par exemple et sans caractère limitatif, des capteurs, téléphones, appareil GPS...

L'invention est particulièrement adaptée à des dispositifs électroniques de faible consommation électrique, en particulier des capteurs de paramètres physiologiques, tels que, par exemple et sans caractère limitatif, des capteurs électrochimiques mesurant des concentrations ioniques dans des liquides corporels.

A titre d'illustration, le courant produit par une pile selon l'invention peut être utilisé pour alimenter un dispositif dont l'utilisation est particulièrement recommandée au cours d'un effort physique conduisant à la transpiration de l'individu porteur du vêtement-pile. En particulier, la pile pourra alimenter un capteur déterminant la déshydratation en cours d'effort de l'individu en analysant la composition et la teneur en eau de la sueur ; la sueur est alors utilisée comme l'électrolyte de la pile qui alimente en électricité le capteur et comme fluide analysé par le capteur.

Selon une autre variante, la pile selon l'invention alimente un condensateur pour stocker l'énergie électrique générée en vue de la restituer ultérieurement.

La présente invention se rapporte également à un vêtement équipé d'une pile électrochimique formée par au moins deux électrodes, chacune constituée d'un matériau conducteur différent.

Les applications d'une pile selon l'invention sont très nombreuses :
- elle peut constituer une source d'énergie pour des utilisateurs de type pompier ou militaire pour l'émission d'un signal ou l'utilisation d'un capteur physique ou physiologique ;
- elle peut être associée à un capteur physiologique dans un pansement ou un bandage et fournir de l'énergie à partir d'exsudat ou de sang afin de mesurer des données physiologiques du type : taux d'un facteur de croissance, nombre de plaquettes sanguines ou de globules rouges, ou plus basiquement, de détecter l'humidité afin de prévenir le personnel soignant de la nécessitée de changer le pansement ou bandage ;
- sur le même principe, elle peut être intégrée à une couche culotte et reliée à une diode lumineuse afin d'allumer un voyant par génération de courant lorsque l'urine vient toucher les électrodes.

L'invention est maintenant décrite plus en détail au regard des figures suivantes :
Les **Figures 1 et 2** représentent deux exemples de réalisation de pile selon l'invention.
La **Figure 3** représente le schéma d'une pile comprenant plusieurs couples d'électrodes tissées au sein d'un tissu montées en série.
La **Figure 4** représente le schéma d'une pile comprenant un couple d'électrodes tissées au sein d'un tissu comportant une zone hydrophobe transversale.
La **Figure 5** représente le schéma d'une pile comprenant plusieurs couples d'électrodes tissées au sein d'un tissu montées en parallèle.
La **Figure 6** représente le montage de la pile or/aluminium mise en oeuvre dans l'exemple 1.

### Exemple 1 : Préparation d'une pile avec électrodes en or et en aluminium

Un morceau de silicium d'une surface de 1 cm² sur lequel est déposé une couche d'or (11) de 0,5 µm d'épaisseur et un morceau de silicium de même surface recouvert d'une couche d'aluminium (12) de 0,5 µm d'épaisseur sont immergés dans une solution de sueur synthétique (13).

La sueur synthétique est composée de NaCl à 30 mM, de KCl à 6 mM et de CaCl₂ à 1,1 mM dans de l'eau.

Les deux électrodes sont reliées à un condensateur (14) qui se charge au cours de la réaction électrochimique (voir le montage à la **Figure 6**).

Les résultats obtenus sont les suivants :

| DDP mesurée | Courant mesuré |
|---|---|
| 0,65 à 0,7 V | 150 µA à 200 µA |

### Exemple 2 : Préparation d'une pile dont les électrodes sont tissées au sein d'un tissu

Le montage de cet exemple est schématisé à la **Figure 3**.

Toutes les électrodes sont tissées parallèlement les unes aux autres à une distance de quelques millimètres, l'anode est en aluminium et la cathode en or. Chaque couple d'électrode est séparé par un matériau isolant (obtenu en enduisant le tissu avec de la colle Epotek UV 0612) disposé dans le tissu (mélange de 70% de coton et de 30% d'élasthane) parallèlement aux électrodes. Enfin, l'anode d'un couple d'électrodes est reliée par un fil conducteur en métal à la cathode du couple d'électrode voisin.

## Revendications

1. Pile électrochimique comportant au moins deux électrodes (21, 22), chacune constituée d'un matériau conducteur différent, **caractérisée en ce que** lesdites électrodes sont tissées ou cousues dans le tissu d'un vêtement, ledit tissu comprenant entre 60 et 90% d'une fibre en matière naturelle animale ou végétale et entre 10 et 40% d'une fibre textile en matière chimique élastique, et que ladite pile utilise comme électrolyte un fluide physiologique.

2. Pile selon la revendication 1 **caractérisée en ce que** ledit matériau conducteur est un métal.

3. Pile selon la revendication 1 ou 2, **caractérisée en ce qu'**elle est constituée d'au moins deux couples d'électrodes (21, 22) montés en série (10).

4. Pile selon l'une quelconque des revendications 1 à 3, **caractérisée en ce que** ledit électrolyte est choisi parmi la sueur, l'urine, le sang, les larmes, les exsudats.

5. Pile selon la revendication 4, **caractérisée en ce que** ledit électrolyte est apporté par l'individu.

6. Pile selon l'une quelconque des revendications 1 à 5, **caractérisée en ce que** lesdites électrodes (21, 22) sont tissées ou collées parallèlement les unes aux autres dans ou sur un tissu.

7. Pile selon l'une quelconque des revendications 1 à 6, **caractérisée en ce que** ladite fibre naturelle animale ou végétale est du coton et/ou ladite fibre textile en matière chimique élastique est l'élasthanne.

8. Pile selon l'une quelconque des revendications 1 à 7, **caractérisée en ce qu'**elle alimente en électricité un dispositif électronique ou électrique.

9. Pile selon l'une quelconque des revendications 1 à 7, caractérisée en qu'elle alimente un condensateur.

10. Vêtement comprenant une pile selon l'une quelconque des revendications 1 à 9.

## Patentansprüche

1. Elektrochemische Zelle, umfassend wenigstens zwei Elektroden (21, 22), von denen jede aus einem anderen leitenden Material besteht, dadurch gekenntzeichnet, dass die Elektroden in das Gewebe eines Kleidungsstücks eingewogen oder eingenäht sind, wobei das Gewebe zwischen 60 und 90% einer Faser aus natürliches tierischen oder pflanzlichen Material und zwischen 10 und 40% einer Textilfaser aus elastischem chemischen Material umfasst, und dass die Zelle eine physiologische Flüssigkeit als Elektrolyten verwendet.

2. Zelle nach Anspruch 1, **dadurch gekennzeichnet, dass** das leitende Material ein Metall ist.

3. Zelle nach Anspruch 1 oder 2, **dadurch gekennzeichnet, dass** sie aus wenigstens zwei in Reihe (10) geschalteten Elektrodenpaaren (21, 22) besteht.

4. Zelle nach einem der Ansprüche 1 bis 3, dadurch gekennzeichet, dass der Elektrolyt ausgewählt ist aus Schweiß, Urin, Blut, Tränen und Exsudaten.

5. Zelle nach Anspruch 4, **dadurch gekennzeichnet, dass** der Elektrolyt von einem Individuum bereit gestellt ist.

6. Zelle nach einem der Ansprüche 1 bis 5, **dadurch gekennzeichnet, dass** die Elektroden (21, 22) parallel zueinander in oder auf ein Gewebe gewoben oder geklebt sind.

7. Zelle nach einem der Ansprüche 1 bis 6, **dadurch gekennzeichnet, dass** die natürliche tierische oder pflanzliche Faser Baumwolle ist und/oder die Textilfaser aus elastischem chemischen Material Elastin ist.

8. Zelle nach einem der Ansprüche 1 bis 7, **dadurch gekennzeichnet, dass** sie eine elektronische oder elektrische Vorrichtung mit Elektrizität versorgt.

9. Zelle nach einem der Ansprüche 1 bis 7, **dadurch gekennzeichnet, dass** sie einen Kondensator versorgt.

10. Kleidungsstück, umfassend eine Zelle nach einem der Ansprüche 1 bis 9.

## Claims

1. Am electrochemical cell comprising at least two electrodes (21, 22), each consisting of a different conductive material, **characterized in that** said electrodes are woven or sewn in the fabric of an article of clothing, said fabric containing between 60 and 90% of an animal or vegetal natural fiber and between 10 and 40% of a textile fiber made of an elastic chemical material, and **in that** said cell uses a physiological fluid as electrolyte.

2. The cell as claimed in claim 1, **characterized in that** said conductive material is a métal.

3. The cell as claimed in claim 1 or 2, **characterized in that** it consists of at least two pairs of electrodes (21, 22) connected in series (10).

4. The cell as claimed in any one of claims 1 to 3, **characterized in that** said electrolyte is selected from sweat, urine, blood, tears, exudates.

5. The cell as claimed in claim 4, **characterized in that** said electrolyte is provided by the individual.

6. The cell as claimed in any one of claims 1 to 5, **characterized in that** said electrodes (21, 22) are woven or adhesively bonded parallel to one another in or on a fabric.

7. The cell as claimed in any one of claims 1 to 6, **characterized in that** said animal or vegetal natural fiber is cotton and/or said textile fiber made of an elastic chemical maternal is elastane.

8. The cell as claimed in any one of claims 1 to 7, **characterized in that** it supplies an electronic or electrical device with electricity.

9. The cell as claimed in any one of claims 1 to 7, **characterized in that** it supplies a capacitor.

10. An article of clothing comprising a cell as claimed in many one of claims 1 to 9.
